Europäisches Patentamt

European Patent Office

Office européen des brevets

(19)

(11) Veröffentlichungsnummer: **0 026 460**
**B1**

(12) **EUROPÄISCHE PATENTSCHRIFT**

(45) Veröffentlichungstag der Patentschrift: **02.05.84**

(21) Anmeldenummer: **80105762.1**

(22) Anmeldetag: **24.09.80**

(51) Int. Cl.³: **G 11 C 8/00, G 06 F 13/00**

(54) Schaltungsanordnung zum Adressieren von Daten für Lese- und Schreibzugriffe in einer Datenverarbeitungsanlage.

(30) Priorität: **28.09.79 DE 2939412**

(43) Veröffentlichungstag der Anmeldung:
**08.04.81 Patentblatt 81/14**

(45) Bekanntmachung des Hinweises auf die Patenterteilung:
**02.05.84 Patentblatt 84/18**

(84) Benannte Vertragsstaaten:
**AT BE CH FR GB IT LI LU NL SE**

(56) Entgegenhaltungen:
**DE - A - 2 317 687**
**DE - A - 2 422 495**
**DE - A - 2 542 102**
**DE - B - 2 347 632**
**US - A - 3 588 829**
**US - A - 3 771 137**
**US - A - 4 138 720**
**US - A - 4 151 598**
**US - A - 4 158 227**

(73) Patentinhaber: **SIEMENS AKTIENGESELLSCHAFT Berlin und München Wittelsbacherplatz 2 D-8000 München 2 (DE)**

(72) Erfinder: **Feissel, Wolfgang, Dipl.-Phys. Gräfelfinger Strasse 24 D-8000 München 70 (DE)**

Courier Press, Leamington Spa, England.

## Schaltungsanordnung zum Adressieren von Daten für Lese- und Schreibzugriffe in einer Datenverarbeitungsanlage

Die Erfindung bezieht sich auf eine Schaltungsanordnung zum Adressieren von Daten für Lese- und Schreibzugriffe in einer Datenverarbeitungsanlage gemäß dem Oberbegriff des Anspruchs.

Bei Datenverarbeitungsanlagen mit einem oder mehreren zyklisch arbeitenden Prozessoren werden alle Verarbeitungsschritte, insbesondere auch alle Arbeitsspeicherzugriffe innerhalb jeweils gleichlanger Zeitintervalle ausgeführt. Diese Zeitintervalle werden als Maschinenzykluszeit bezeichnet. Bei Hochleistungsmaschinen mit sehr kurzen Maschinenzykluszeiten kann es nun durchaus vorkommen, daß für einen Arbeitsspeicher-Lese- oder Schreibzugriff mehr als eine Maschinenzykluszeit benötigt wird. Um eine solche Arbeitsweise, die auf Kosten der Arbeitsgeschwindigkeit geht, zu vermeiden, werden in bekannter Weise zwischen Zentralprozessor und Arbeitsspeicher schritthaltend arbeitende Pufferspeicher eingeschaltet. Unter schritthaltender Arbeitsweise wird dabei verstanden, daß in jedem Maschinenzyklus eine beliebige Lese- oder Schreiboperation gestartet werden kann und diese auch ausgeführt wird. Aus wenigstens zwei Gründen kann jedoch diese schritthaltende Arbeitsweise auch bei Pufferspeichern nicht absolut, wohl aber doch sehr gut argenähert erreicht werden. Der eine Grund besteht im Ladeverfahren, bei dem immer nur dann Daten aus dem Arbeitsspeicher in den Pufferspeicher übertragen werden, wenn die gewünschten Daten bei einem Lesezugriff nicht im Pufferspeicher angetroffen werden. Durch eine entsprechend große Bemessung des Pufferspeichers können allerdings die Lesefehlzugriffe und damit notwendige Ladevorgänge in Mittel unter 5% der Gesamtzugriffe gesenkt werden. Der zweite Grund ist darauf zurückzuführen, daß im Pufferspeicher nicht simultan geschrieben oder gelesen werden kann. Tritt nämlich bei zwei aufeinanderfolgenden Maschinenzyklen ein Operationswechsel von Schreiben auf Lesen ein und wird ein Maschinenzyklus zur Selektion eines Datenwortes im Pufferspeicher benötigt, so ist erst am Ende des ersten Maschinenzyklus bekannt, ob und wo der Pufferspeicher überschrieben werden soll. Die Schreiboperation kann deshalb erst ab dem zweiten Maschinenzyklus ausgeführt werden, d.h. in einem Zeitintervall, in dem bereits die nachfolgende Leseoperation ausgeführt werden sollte.

Gemäß einem bekannten Verfahren ist vorgesehen, daß Grundsätzlich bei jeder Operation zunächst in einem ersten Maschinenzyklus das sogenannte Tagfeld des Pufferspeichers, in dem die Adressen aller Pufferspeicher-Einträge gespeichert sind, daraufhin untersucht wird, ob die gewünschten Daten im Pufferspeicher dupliziert sind. In einem nachfolgenden Maschinenzyklus werden dann die eigentlichen Daten im Datenpuffer selektiert und ggf. überschrieben. Bei diesem aus der US—A—3 588 829 (Boland) bekannten Verfahren können in einzelnen sich überlappenden Anfragezyklen beliebig wechselnde Lese- und Schreiboperationen lückenlos aneinandergereiht werden. Es hat indessen den Nachteil, daß jeder Zugriff praktisch zwei Maschinenzyklen dauert.

Aus der US—PS 3 771 137 ist ferner eine Datenverarbeitungsanlage mit mehreren Prozessoren und diesen zugeordneten Pufferspeichern bekannt, bei dem eine Prozessoranforderung an den Pufferspeicher in der Weise eingeleitet wird, daß der Datenspeicher und der Verzeichnis- bzw. Tag/Flag-Speicher gleichzeitig mit der in einem Register bereitgestellten Adresse adressiert werden.

Der vorliegenden Erfindung liegt nun die Aufgabe zugrunde, eine Schaltungsanordnung der eingangs näher bezeichneten Art in der Weise zu verbessern, daß erstens ein Lesezugriff nur einen Maschinenzyklus beansprucht und zweitens die Operationsfolge Schreiben-Lesen mit hoher Wahrscheinlichkeit ohne Unterbrechung ablaufen kann.

Erfindungsgemäß wird diese Aufgabe durch die im kennzeichnenden Teil des Anspruchs genannten Merkmale gelöst.

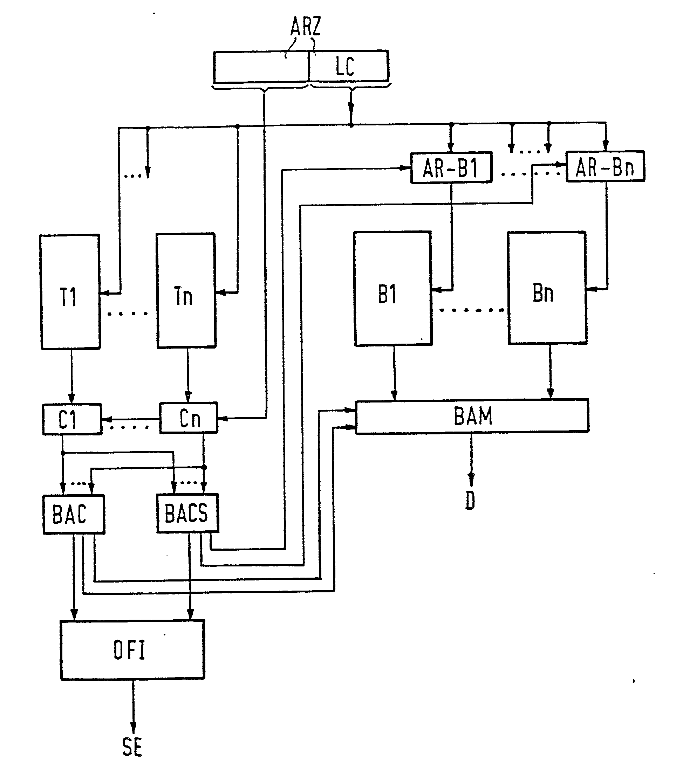

Im folgenden wird ein Ausführungsbeispiel der Erfindung anhand der Zeichnung näher erläutert.

Die Figur zeigt den prinzipiellen Aufbau eines nach dem "Set-Assoziativ -Prinzip arbeitenden Pufferspeichers. Dieser Pufferspeicher besteht im einzelnen aus einem in n gleichgroße Bänke B1 ... Bn unterteilten Datenpuffer und ebenfalls n, den einzelnen Datenpufferbänken zugeordnete Tag/Flag-Speichern T1 ... Tn, in denen die Seitenadressen aller Pufferspeichereinträge gespeichert sind. Die Datenpufferbänke B1 ... Bn und die ihnen zugeordneten Tag/Flag-Speicher T1 ... Tn sind jeweils in m gleichgroße Sets unterteilt. Der Zugriff zum Pufferspeicher erfolgt wie üblich über ein dem Zentralprozessor zugeordnetes Adreßregister ARZ in der Weise, daß mit Hilfe der Seitenklassenadresse LC, d.h. mit den niederwertigen Adreßbits sämtliche Tag/Flag-Speicher und Datenpufferbänke angesteuert werden. Nach Ablauf der Zugriffszeit liegen dann am Ausgang des Datenpuffers das jeweils ausgewählte Datenset und am Ausgang des Tag/Flag-Speichers die dem ausgewählten Set zugeordnete Seitenadresse. Jedem Tag/Flag-Speicher T1 ... Tn ist ein Komparator C1 ... Cn nachgeschaltet, in welchem ein Adressenvergleich zwischen der im Tag/Flag-Speicher ausgewählten Seitenadresse und den höherwertigen Adreßbits des Adreßregisters ARZ stattfindet. Bei Gleichheit beider Adressen geht schließlich über einen Bankauswahl-

Codierer BAC ein Auswahlcode an den Datenpuffer B1 ... Bn, wobei es den nachgeschalteten Bankauswahlmultiplexer BAM auf die jeweils zuständige Bank einstellt und die angeforderten Daten D durch-schaltet.

Wesentlich bei dem eben geschilderten Zugriff ist, daß der Tag/Flag-Speicher und der Datenpuffer gleichzeitig mit der Seitenklassenadresse LC adressiert werden. Während einer Schreiboperation ist daher das Lesen des Tag/Flag-Speichers ohne weiteres möglich. Während des Schreibvorgangs können auch alle Datenpufferbänke B1 .. Bn, bis auf die eine, in die gerade geschrieben wird, neu adressiert werden.

Damit nun bei einer Operationsfolge Schreiben-Lesen bereits während des Schreibvorgangs die jeweils nicht am Schreibvorgang beteiligten Bänke mit dem Seitenklassenadreßteil LC der Leseadresse selektiert werden können, sind einige Schaltungsergänzungen vorgesehen. Die wichtigste Ergänzung bilden mehrere jeweils einer Datenpufferbank zugeordnete Bank-Adreßregister AR—B1 . . . AR—Bn. Bei der Operation "Schreiben" wird nun in einem dieser Bank-Adreßregister, in dessen zugehöriger Datenpufferbank die zu überschreibenden Daten gespeichert sind, die Seitenklassenadresse LC für den nachfolgenden Maschinenzyklus gespeichert. Alle anderen Bank-Adreßregister übernehmen dagegen im Schreibzyklus die für die Leseoperation vorgesehene Seitenklassenadresse. Die steuerung zur Übernahme des Seitenklassenadreßteils LC für die Schreiboperation geschieht über einen mit den Ausgängen der Komparatoren C1 .. Cn verbundenen zweiten Bankauswahlcodierer — "Schreiben" BACS, in dem die Vergleichsergebnisse der Komparatoren im Fall "Schreiben" gespeichert werden. Die Ausgänge der beiden Bankauswahlcodierer BAC und BACS sind ferner mit einem Operationsfolgeindikator OFI verbunden. Dieser Operationsfolgeindikator erkennt die spezielle Operationsfolge "Schreiben-Lesen" und aktiviert im Bankauswahlcodierer — "Schreiben" BACS eine Vergleichseinrichtung, mit der festgestellt werden kann, ob simultan in ein und dieselbe Pufferbank geschrieben und aus ihr gelesen werden soll. In diesem Fall wird an den Zentralprozessor ein Signal SE gesendet, das diesen veranlaßt, einen zusätzlichen Maschinenzyklus einzublenden, mit dem die behinderte Leseoperation ausgeführt werden kann.

**Patentanspruch**

1. Schaltungsanordnung zum Adressieren von Daten für Lese- und Schreibzugriffe in einer Datenverarbeitungsanlage, bei der zwischen einem Zentralprozessor und einem Arbeitsspeicher ein Pufferspeicher mit zugehörigem Adreßregister (AR—B) angeordnet ist und die Daten durch Seiten- und Klassenadressen (LC) adressiert werden, bei der der Pufferspeicher aus einem in n gleichgroße Bänke (B1 ... Bn) unterteilten Datenpuffer und mehreren, jeweils einer der Bänke zugeordneten, der Speicherung der Seitenadressen dienenden Tag/Flag-Speichern (T1 ... Tn) besteht und der ebenso wie der Arbeitsspeicher in eine vorgegebene Anzahl von Klassen unterteilt ist, wobei die Daten im Pufferspeicher und im Arbeitsspeicher jeweils in die gleiche Klasse eingespeichert werden, bei der ferner mit der Klassenadresse gleichzeitig im selben Maschinenzyklus der jeweilige Inhalt von Datenpuffer und zugehörigem Tag/Flag-Speicher ausgewählt wird und am Ausgang eines jeden Tag/Flag-Speichers mit Hilfe je einer Vergleichsschaltung (C1 ... Cn) ein Adressenvergleich zwischen der unmittelbar vom Adreßregister des Zentralprozesors stammenden Seitenadresse und der im Tag/Flag-Speicher ggf. gespeicherten Seitenadresse erfolgt und bei der die Ausgänge der Vergleichsschaltungen mit einer Bankauswahl-Lesesteuerung (BAC) verbunden sind, die bei Adressengleichheit einen Auswahlcode für einen den Datenpufferbänke nachgeschalteten Bankauswahlmultiplexer (BAM) liefert, der entsprechend dem Auswahlcode auf die jeweils zuständige Datenpufferbank einstellbar ist, dadurch gekennzeichnet, daß den einzelnen Datenpufferbänken (B1 ... Bn) jeweils eigene Klassenadreßregister (AR—B1 ... AR—Bn) zugeordnet sind, die über eine mit den Ausgängen der einzelnen Vergleichsschaltungen (C1 ... Cn) verbundene Bankauswahl-Schreibsteuerung (BACS) in der Weise ansteuerbar sind, daß nur jeweils in eines dieser Klassenadreßregister (AR—B1 ... AR—Bn), dessen zugehörige Datenpufferbank (B1 ... Bn) für eine Schreiboperation vorgesehen ist, eine Schreibadresse auch noch während des nächsten Maschinenzyklus eingespeichert bleibt, während in diesem nächsten Maschinenzyklus gleichzeitig alle übrigen n—1 Klassenadreßregister mit einer Leseadresse beaufschlagbar sind und daß die Ausgänge von Bankauswahl-Schreib- und Lesesteuerung (BACS, BAC) mit einem Operationsfolge-Indikator (OFI) verbunden sind, der bei der Operationsfolge "Schreiben-Lesen" einerseits eine in der Bankauswahl-Schreibsteuerung (BACS) vorgesehene Vergleichsschaltung aktiviert um festzustellen ob simultan in eine und dieselbe Pufferbank geschrieben und aus ihr gelesen werden soff und andererseits ein Signal (SE) an den Zentralprozessor zur Einblendung eines zusätzlichen Maschinenzyklus für die behinderte Leseoperation sendet.

**Claim**

1. Circuit arrangement for addressing data for read and write accesses in a data processing system, wherein a buffer store having an assigned address register (AR—B) is arranged between a central processor and a main memory and the data are addressed by page and class addresses (LC), and wherein the buffer store comprises a data buffer divided into n identical banks (B1 ... Bn) and a plurality of tag flag stores (T1 ... Tn) which are respectively assigned to one of the banks and serve to store the page addresses, and which buffer store is divided into a pre-determined number of classes like the main memory where the items of data in the buffer store and in the main memory are respectively stored in the same class, and wherein furthermore in the same machine cycle, the respective content of data buffer and assigned tag/flag store is selected simultaneously with the class address and at the output of each tag/flag store, with the aid of a comparison circuit (C1 ... Cn), an address comparison is effected between the page address directly derived from the address register of the central processor and the page address possibly stored in the tag/flag store and wherein the outputs of the comparison circuits are connected to a bank selection read control unit (BAC) which when the addresses are identical supplies a selection code for a bank selection multiplexer (BAM) which is connected following the data buffer banks and which, in accordance with the selection code, can be set to the respectively authorized data buffer bank, characterised in that the individual data buffer banks (B1 ... Bn) are respectively assigned separate class address registers (AR—B1 ... AR—Bn) which can be controlled by means of a bank selection write control unit (BACS), which is connected to the outputs of the individual comparison circuits (C1 ... Cn), in such a manner that only one write address respectively remains stored in one of these class address registers (AR—B1 ... AR—Bn), whose assigned data buffer bank (B1 ... Bn) is provided for a write operation, even during the next machine cycle, whereas in this next machine cycle all remaining n—1 class address registers can be simultaneously supplied with a read address, and that the outputs of bank selection-write control unit and read control unit (BACS, BAC) are connected to an operation sequence indicator (OFI) which in the operation sequence "write-read", on the one hand activates a comparison circuit, which is arranged in the bank selection write control unit (BACS), in order to determine whether writing into and reading from one and the same buffer bank is to take place simultaneously and on the other hand transmits a signal (SE) to the central processor in order to gate in an additional machine cycle for the obstructed read operation.

**Revendication**

1. Montage pour l'adressage de données pour des accès de lecture et d'enregistrement dans une installation de traitement des données, dans lequel une mémoire tampon comportant un registre d'adresses associé (AR—B) est disposé entre une unité centrale de traitement et une mémoire de travail et dans lequel les données sont adressées par des adresses de pages et de classes (LC), dans lequel la mémoire tampon est constituée par une mémoire tampon subdivisée en n bancs de taille identique (B1 ... Bn) et par plusieurs mémoires de préfixes d'indicatifs/de drapeaux (T1 ... Tn) associées respectivement aux différents bancs et servant à la mémorisation des adresses de page et est subdivisée, tout comme la mémoire de travail, en un nombre prédéterminé de classes, les données présentes dans la mémoire tampon et dans la mémoire de travail étant mémorisées respectivement dans la même classe, et dans lequel en outre simultanément lors du même cycle machine le contenu respectif du tampon des données et de la mémoire de préfixes d'indicatifs/de drapeaux est sélectionné avec l'adresse de classe et une comparaison de l'adresse de page, provenant directement du registre d'adresses de l'unité centrale de traitement, et de l'adresse de page éventuellement mémorisée dans la mémoire de préfixes d'indicatifs/de drapeaux est réalisée à la sortie de chaque mémoire de préfixes d'indicatifs/de drapeaux à l'aide d'un circuit comparateur respectif (C1 ... Cn), et dans lequel les sorties des circuits comparateurs sont reliées à un dispositif (BAC) de commande de lecture pour la sélection de bancs, qui, en cas d'égalité des adresses, délivre un code de sélection pour un multiplexeur (BAM) de sélection de bancs branché en aval des bancs du tampon des données et qui peut être réglé conformément au code de sélection sur le banc respectivement concerné du tampon des données, caractérisé par le fait qu'aux différents bancs (B1 ... Bn) du tampon des données sont associés des registres respectifs particuliers d'adresses de classes (AR—B1 ... AR—Bn), qui peuvent être commandés par l'intermédiaire d'un dispositif (BACS) de commande d'enregistrement pour la sélection de bancs relié aux sorties des différents circuits comparateurs (C1 ... Cn) de telle manière qu'une adresse d'enregistrement reste mémorisée encore pendant le cycle machine suivant uniquement dans l'un de ces registres d'adresse de classes (AR—B1 ... AR—Bn), dont le banc associé (B1 ... Bn) du tampon des données est prévu pour une opération d'enregistrement, tandis que pendant ce cycle machine suivant simultanément l'ensemble des (n—1) autres registres d'adresses de classes peuvent être chargés par une adresse de lecture, et que les sorties de dispositifs (BACS, BAC) d'enregistrement et de lecture pour la sélection de bancs sont reliées à un indicateur (OFI) de séquences d'opérations, qui, lors de la séquence d'opérations (enregistrement-lecture), d'une part active un circuit comparateur prévu dans le dispositif (BACS) de commande d'enregistrement pour la sélection de bancs afin de déterminer si un enregistrement et une lecture doivent être réalisés simultanément dans et hors d'un même banc du tampon, et d'autre part envoie un signal (SE) à l'unité centrale de traitement pour déclencher un cycle machine supplémentaire pour l'opération empêchée de lecture.